# EUROPEAN PATENT APPLICATION

(11) **EP 4 800 493 A1**
(43) Date of publication of application: **02.09.2026**
(21) Application number: 25160926.9
(22) Date of filing: 28.02.2025
(51) Int. Cl.: G04F 5/14, B82Y 10/00, G06N 10/20, G06N 10/40, G21K 1/00, H03K 17/00, H03K 17/62, H03K 17/693

(54) **A PARTICLE TRAPPING DEVICE**

(71) Applicant: Infineon Technologies Austria AG, 9500 Villach (AT)
(72) Inventor: REPP, Jens, 85570 Markt Schwaben (DE); BRANDL, Matthias, 85614 Kirchseeon (DE); SIEBERER, Michael, 8010 Graz (AT); COLOMBE, Yves, 9500 Villach (AT)
(74) Representative: Infineon Patent Department

(57) **Abstract**

A mechanism for controlling current flow through conductive elements for a particle trapping device. A control arrangement is configured to control the operation of a switch arrangement to control the current flow between an input electrical interface and return electrical interface, via the conductive elements, to remain substantially constant, even whilst switching which conductive elements conduct the current.

## Description

### TECHNICAL FIELD

The present disclosure relates to a particle trapping device.

### BACKGROUND

There is a growing interest in systems and devices for performing quantum computing. One particular type of quantum computing environment is a trapped particle environment, in which computing is performed using particles (e.g., ions, electrons, atoms or photons) as qubits for computation.

Quantum computing requires a well-controlled environment, and precise handling of the particles. Generally, particles in a trapped particle device are trapped or controlled using electromagnetic fields. In this context, an electromagnetic field also comprises electric and/or magnetic field (such as pure electric fields and/or pure magnetic fields). Thus, an electric field and a magnetic field are manifestations of an electromagnetic field.

For example, particles may be moved between locations (e.g., storage, processing and readout locations) in a process called shuttling. In order to control the particle movement, an electrical power provided to electrodes is controlled to provide an intended electromagnetic field (EM-field). Therefore, there is a desire for accurate and reliable provision of electrical power within a particle trapping device, not least to ensure accurate control of the EM-fields. There is also an ongoing desire to reduce any noise or other undesired fluctuations of the EM-field experienced by any trapped particles, particularly the magnetic component of the EM-field. The coherence, location and movement of the particle(s) may be sensitive even to subtle changes in the EM-field.

### SUMMARY

There is provided a particle trapping device comprising: an input electrical interface; a return electrical interface; a plurality of conductive elements connected between the input electrical interface and the return electrical interface, wherein the plurality of conductive elements comprises a plurality of conductive wires each configured to, when conducting current, produce a respective electromagnetic field for interacting with a trapped particle; a switch arrangement configured to, for each conductive element, facilitate control of whether or not said conductive element conducts current from the input electrical interface to the return electrical interface; and a control arrangement configured to control the operation of the switch arrangement, wherein the control arrangement is configured to control the switch arrangement to change which one or more conductive elements, of the plurality of conductive elements, conduct current from the input electrical interface to the return electrical interface whilst substantially maintaining an overall current flow between the input electrical interface and the return electrical interface.

Those skilled in the art will recognize additional features and advantages upon reading the following detailed description, and upon viewing the accompanying drawings.

### BRIEF DESCRIPTION OF THE DRAWINGS

The present disclosure is illustrated by way of example, and not by way of limitation, in the figures of the accompanying drawings in which like reference numerals refer to similar or identical elements. The elements of the drawings are not necessarily to scale relative to each other. The features of the various illustrated examples can be combined unless they exclude each other.
Fig. 1 illustrates a portion of a particle trapping device.
Fig. 2 illustrates a portion of a proposed particle trapping device.
Fig. 3 illustrates an equivalent circuit for a portion of the proposed trapping device.
Fig. 4 illustrates waveforms for the proposed trapping device.
Fig. 5 illustrates a portion of another proposed particle trapping device.
Fig. 6 illustrates one configuration for a proposed particle trapping device.
Fig. 7 illustrates another configuration for a proposed particle trapping device.
Fig. 8 illustrates another configuration for a proposed particle trapping device.
Fig. 9 illustrates another configuration for a proposed particle trapping device.

### DETAILED DESCRIPTION

The examples described herein provide a mechanism for controlling current flow through conductive elements for a particle trapping device. A control arrangement is configured to control the operation of a switch arrangement to control the current flow between an input electrical interface and return electrical interface, via the conductive elements, to remain substantially constant, even whilst switching which conductive elements conduct the current.

In the context of a quantum computing system, a qubit, or quantum bit, is the fundamental unit of quantum information, analogous to a classical bit. The system is configured to implement qubits using respective particles (e.g., as electrons, ions, or photons). More specifically, the quantum properties of these particles, such as spin, energy levels, or polarization, can be manipulated and measured to represent and process quantum information, i.e., represent qubits.

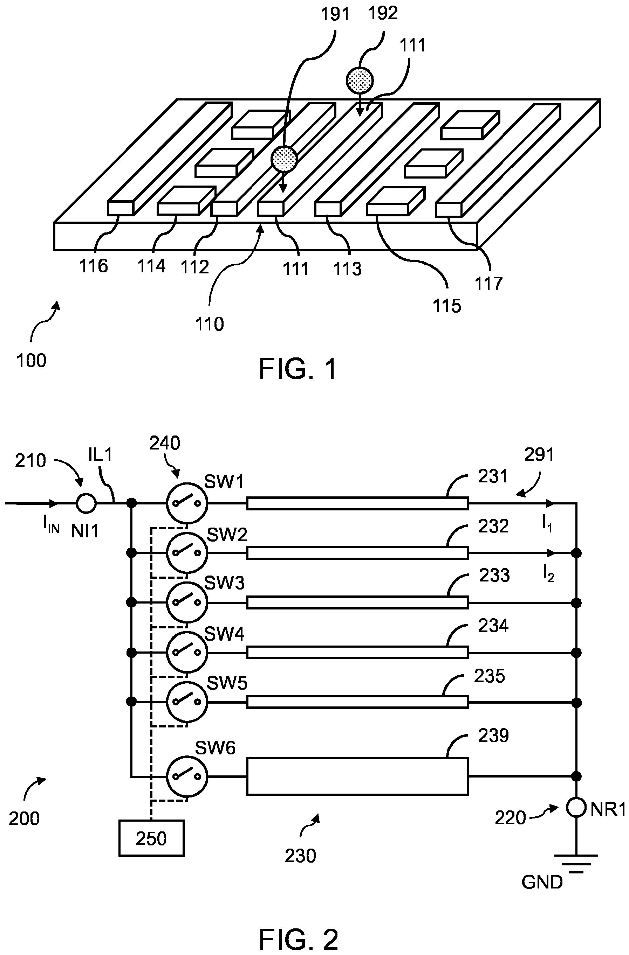

Fig. 1 conceptually illustrates a portion 100 of an exemplary particle trapping device for one or more particles, for improved contextual understanding.

The particle trapping device comprises a particle trapping arrangement 110 configured to selectively trap a respective particle 191, 192 in each of a plurality of different particle trap locations or zones. Each particle may, for instance, be a charged particle such as an ion. The structure and configuration of suitable particle trapping arrangements are well known in the art.

Where the particle trapping device is configured to trap atoms, it is known as an atom trapping device. Where the particle trapping device is configured to trap ions, it is known as an ion trapping device.

Fig. 1 illustrates one suitable example of a particle trapping arrangement 110 that employs electromagnetic fields (including pure electric and/or pure magnetic fields) to trap a charged particle (e.g., an ion). The illustrated particle trapping arrangement 110 comprises one or more central DC electrodes 111. Each particle trap location may lie in the vicinity (e.g., above) the central DC electrode(s).

The central DC electrode(s) 111 may be arranged between two RF electrodes 112, 113, wherein (in use) a voltage applied to the RF electrodes is controlled to maintain the position of the particle within the particle trap location. The particle trapping arrangement 110 may comprise further DC electrodes 114, 115 at either side of the array of the central DC electrode(s) 111 and the RF electrodes 112, 113. In use, the voltage of the further DC electrodes 114, 115 and/or the RF electrodes 112, 113 may be manipulated to control a movement of the trapped particle, e.g., between different particle trap locations or zones.

Other particle trapping arrangements are known in the art and can also be employed without departing from the scope of the present disclosure.

The DC electrodes may be connected or connectable to one or more DC voltage sources (not visible in Fig. 1). Similarly, the RF electrodes may be connected or connectable to one or more RF voltage sources. The ground electrodes may be connected to a ground potential or earth. The electric wiring for the electrodes is not illustrated in the exemplary portion 100 of a system for performing quantum processing of Fig. 1.

In some particle trapping device architectures, there is a need to feed in high currents (e.g., to create a large magnetic field gradient) and/or radiofrequency (RF) signals. These may be required, for instance, to implement some forms of quantum processing tasks, such as performing the function of a quantum gate.

By way of example, with continued reference to the particle trapping device illustrated by Fig. 1, one or more additional electrodes 116, 117 may be provided with such a high current and/or radiofrequency signal. In the illustrated example, the additional electrodes 116, 117 are positioned to lie in/on a same plane as the other electrodes in the particle trapping device. In other examples, the additional electrodes 116, 117 may be buried beneath the other electrodes, e.g., lie in/on a different plane to the other electrodes in the particle trapping device.

A typical RF signal will carry an electrical current of no less than 100 mA, e.g., around 1A.

Some high current signals, such as those employed to create electromagnetic field gradients in the so-called MAGIC architecture (e.g., the architecture set out in Piltz, C., Sriarunothai, T., Varón, A. et al. A trapped-ion-based quantum byte with 10-5 next-neighbour cross-talk. Nat Commun 5, 4679 (2014). https://doi.org/10.1038/ncomms5679), are in the range of 10 A

It has been herein recognized that, for large scale particle trapping devices, it will be beneficial to avoids the need to constantly supply the entire device (e.g., supply every electrode) with a high current or RF signal. This is at least partly due to increased difficulties in supplying a high current or RF signal over increasingly miniaturized conductors, as well as disadvantageous thermal effects with providing a large number of high current/RF signals within a relatively compact area/volume.

According to the present disclosure, it is proposed to restrict the application of a high current or RF signal to only be provided intermittently (e.g., pulsed), provided only at particular times (e.g. during gate operation) and/or provided only to particular parts of the quantum computer. One possible approach may make use of time-division multiplexing to share the same signals with even more parts of the particle trapping device. In this way, signals can be sent to (all) parts of the particle trapping device, but not all simultaneously. The serialization inherently resulting from such a time-division multiplexing technique may make it possible to control larger systems, according to examples.

Examples of the present disclosure propose a mechanism for overcoming at least some of the problems outlined herein.

In particular, it is herein proposed to control a current flow between an input electrical interface and a return electrical interface, connected by a plurality of conductive elements, to be substantially the same whilst switching which conductive elements conduct the current flow. This effectively performs a multiplexing effect between an input and return such that the overall current flow though the plurality of conductive elements does not change substantially.

This may reduce the likelihood and magnitude of voltage spikes in the system, as current will continually flow. Moreover, as the current from the input electrical interface changes only insubstantially, the current flow through each conductive element may settle more quickly.

In the context of the present disclosure, an electromagnetic field is any field with an electric and/or magnetic component (such as a pure electric field and/or a pure magnetic field). Thus, electrical fields and magnetic fields are both forms of an electromagnetic field.

Fig. 2 illustrates a portion of a proposed particle trapping device 200.

The particle trapping device 200 comprises an input electrical interface 210; a return electrical interface 220; a plurality 230 of conductive elements 231, 232, 233, 234, 235, 239; a switch arrangement 240; and a control arrangement 250.

The input electrical interface 210 may be configured to receive an input signal I_{IN}, e.g., produced by a signal generator (not visible in Fig. 2). The input signal I_{IN} preferably carries a (relatively) large current, e.g., a current greater than 200 mA, e.g., greater than 500 mA.

In the present example, the input electrical interface 210 comprises a single input line IL1 for carrying a current (i.e., of the single input signal I_{IN}). In particular, the input electrical interface 210 comprises a single input node NI1 for receiving a single input signal I_{IN}. However, as later exemplified, in other examples, the input electrical interface 210 comprises a plurality of input lines for carrying, and optionally a corresponding plurality of input nodes for receiving, a respective current, i.e., of a respective plurality of input signals.

The return electrical interface 220 may be connected to a ground GND, earth, reference voltage or return line. Examples are well known in the field.

In the present example, the return electrical interface 220 comprises a single return node NR1 for connection to a ground or reference voltage GND, e.g., a voltage earth or a predefined DC offset voltage. However, in other examples, the return electrical interface 220 comprises a plurality of return nodes.

The plurality of conductive elements 231, 232, 233, 234, 235, 239 are connected between the input electrical interface 210 and the return electrical interface 220. In particular, the plurality of conductive elements comprises a plurality of conductive wires 231, 232, 233, 234, 235. Each conductive wire is configured to, when conducting (e.g., an appropriate magnitude of) electrical current, produce a respective electromagnetic field for interacting with a trapped particle.

Referring back to Fig. 1, at least a portion of the conductive wires 231, 232, 233, 234, 235 may function as an electrode 116, 117 for a particle trap location 191, 192. As previously explained, such electrodes may need to be provided with a relatively high current and/or radiofrequency (RF) signal to perform their desired functionality.

Turning back to Fig. 2, in some examples, each conductive wire is configured to carry a current greater than 100mA (e.g., without breaking, blowing and/or substantially changing its conductive properties). Preferably, each conductive wire is configured to carry a current greater than 500 mA e.g., without breaking, blowing and/or substantially changing its conductive properties. This configures each conductive wire for carrying or conducting relatively high currents of the particle trapping device.

In some examples, and as later described, the plurality of conductive elements 230 comprises a dummy load 239. In the context of the present disclosure, a dummy load is any conductive element that, when conducting current, produces an electromagnetic field that has no or negligible interaction with the/any trapped particle (i.e., any particle trapped by the particle trapping device). This feature of a dummy load may be achieved in any number of ways, e.g., through appropriate positioning of the dummy load (e.g., distancing from any particle trapping locations) and/or shielding of the dummy load.

The particle trapping device 200 further comprises a switch arrangement 240 configured to, for each conductive element, facilitate control of whether or not said conductive element conducts current from the input electrical interface to the return electrical interface. More generally, the switch arrangement 240 may be configured to control a permissible current flow through each conductive element.

In the illustrated example, the switch arrangement comprises, for each conductive element a first switch SW1, SW2, SW3, SW4, SW5, SW6 connected between the input electrical interface and the conductive element. The operation of each first switch is controllable (e.g., by a control arrangement, later described) to control at least whether or not current is able to flow from the input electrical interface to the return electrical interface.

Other example structures for a switch arrangement will be apparent to the skilled person. For instance, the switch arrangement may additionally or otherwise comprise, for each conductive element, a second switch connected between the conductive element and the return electrical interface.

Of course, a combination of these forms of arrangement may be used. Thus, in general, the switch arrangement may comprise, for each conductive element, a first switch and/or a second switch (embodied as previously described) connected in series with said conductive arrangement. In other words, the switch arrangement comprises at least one switch for each conductive element.

Each switch of the switch arrangement may, for instance, be embodied as a transistor such as a MOSFET or BJT. Other suitable examples of switches are well known to the skilled person.

Preferably, the switch arrangement is configured such that each switch (e.g., each first switch and each second switch) has a current rating no less than 100mA, and preferably no less than 500mA. This configures the switch arrangement to be suitable for operating with high current values (e.g., high current signals or RF signals previously described).

In the context of the present disclosure, a current rating (sometimes known as an ampacity) is a maximum current that can safely flow through an electrical component without risking damage to the electrical component and/or affecting future electrical parameters of the electrical component.

It will be appreciated that the plurality of conducting elements and the switch arrangement can be considered to define a plurality of branch elements between the input electrical interface and the output electrical interface. Each branch element comprises a respective (different) first switch (and/or a second switch) and a conductive element. For instance, a first branch element 291 comprises a first first switch SW1 and a first conductive element 231. A current flowing through each branch element is controllably by controlling the conductivity of the switch(es) of said branch element.

The particle trapping device 200 further comprises a control arrangement 250 configured to control the operation of the switch arrangement.

In particular, the control arrangement is configured to control the switch arrangement to change which one or more conductive elements, of the plurality of conductive elements, conduct current from the input electrical interface to the return electrical interface whilst substantially maintaining an overall current flow between the input electrical interface and the return electrical interface.

In other words, the control arrangement 250 is configured to maintain a current flow between the input electrical interface and the return electrical interface whilst changing which conductive element(s) 231, 232, 233, 234, 235, 239 conduct said current flow. Put yet another way, the control arrangement controls the operation of the switch arrangement such that the sum of all currents through the plurality 230 of conductive elements remains substantially constant.

In this way, the current through any parasitic inductances of the plurality of conductive elements remains substantially constant, reducing a likelihood and magnitude of large voltage peaks. As previously explained, this reduces a risk and/or magnitude of unexpected or unintended changes to the electromagnetic fields that interact with any trapped particles.

It will be appreciated that the control arrangement is configured to perform this functionality when current flow is a non-zero current flow (i.e., the input signal I_{IN} is non-zero), e.g., a current flow for a current having an amplitude of no less than 100 mA, e.g., no less than 500 mA.

It has been recognized that simply switching the control of a current flow in electrical conductors of a particle trapping device to be "on" or "off", without an appropriate control scheme, creates a significant risk of sharp/high voltage peaks due to parasitic inductances, e.g. in wire bonds. These voltage peaks will naturally alter the electromagnetic field(s) used to interact with the trapped particle(s), and might negatively impact the coherence of the qubits represented by the trapped particle(s). This risk is mitigated through the use of the proposed approach in which the current flow between the input electrical interface and the return electrical interface is substantially maintained.

Moreover, if time-division multiplexing is used (e.g., to share the same signals to different parts of the particle trapping device), then current flow should settle to precise and accurate values to avoid or reduce a risk of interference with any electrical/magnetic/electromagnetic fields for interacting with a trapped particle. This would inherently require a long settling time, which significantly impacts a possible speed of operation. The proposed approach which maintains current flow contributes to resolving this further recognized problem as well, as there is no need to wait for a settling time as the current is substantially maintained.

Example approaches for controlling the operation of a switching arrangement, and particularly switches of a switching arrangement, are widely known in the art.

In general, each switch may be voltage-controlled switch, in which the magnitude of a voltage (known as a gate voltage) supplied to the switch defines the resistance/conductivity of the switch. In particular, there may be a known relationship between the magnitude of the gate voltage supplied to a switch and the resistance of the switch. This facilitates granular control over the resistance of the switch, and therefore the current flow through a conductive element connected to the switch.

As a working example, each switch of the switching arrangement is embodied as a transistor (e.g., having a gate, source and drain). In such examples, the control arrangement may be configured to control a voltage supplied to the gate of each transistor (i.e., the gate voltage of each transistor) in order to control whether or not said transistor (and therefore the associated conducting element) is able to conduct current.

For the sake of brevity, the voltage for controlling a voltage-controllable switch is herein labelled a gate voltage, but the skilled person would readily appreciate a wide variety of other labels and control mechanisms for any conceivable voltage-controllable switch.

More particularly, the gate voltage of each transistor may be controlled to control an effective conductivity or resistance of the transistor, and thereby a more granular control over current through the corresponding conductive element. The resistance of a transistor is controllable by controlling the transistor to operate in the linear mode.

In this way, the control arrangement is able to control the total resistance between the input electrical interface and the output electrical interface, e.g., to maintain a substantially constant total resistance and therefore a substantial constant current flow.

In particular examples, the control arrangement is configured to control the transition between a change in which one or more conductive elements are permitted or able to conduct current.

More specifically, the control arrangement may be configured to (gradually) increase the conductivity of one or more branch elements, e.g., through control of the gate voltage(s) supplied to the corresponding switch(es) of the branch element(s), whilst (gradually) reducing the conductivity of one or more other branch element(s) - in order to maintain the overall resistance of, and current flow, through the branch elements.

Even more specifically, the control arrangement may be configured to control the resistance R_{SW} of each switch of the switch arrangement such that the combined resistance of the branch elements remains substantially constant. As the relationship between gate voltage and resistance of a (voltage-controllable) switch is known, this can be readily achieved through control of the gate voltage of each switch.

The switch arrangement and the control arrangement thereby effectively function as a multiplexer to control current flow from the input electrical interface to the return electrical interface.

The control arrangement 250 may be embodied as any suitable processing unit or system capable of controlling the operation of a switch arrangement. By way of example, the control arrangement 250 may comprise one or more pieces of general-purpose and/or fixed function circuitry, such as a general-purpose microprocessor (e.g., a CPU), a field-programmable gate array (FPGA), an appropriately configured application-specific integrated circuit (ASIC), and/or a distributed processing arrangement (e.g., comprising multiple interconnected processing units working in parallel). Other examples will be readily apparent to the appropriately skilled person.

A simple scenario is hereafter described, in which only a single conductive element is intended to conduct current (from the input electrical interface 210 to the return electrical interface 220) at a time. The control arrangement controls which single conductive element conducts current, and manages transitions between switching which single conductive element conduct current (during which transition, more than one conductive element may conduct current).

For the purposes of this scenario, the control arrangement 250 aims to transition from a first conductive element 231 conducting all current (from the input electrical interface to the return electrical interface) to a second conductive element 232 conducting all current.

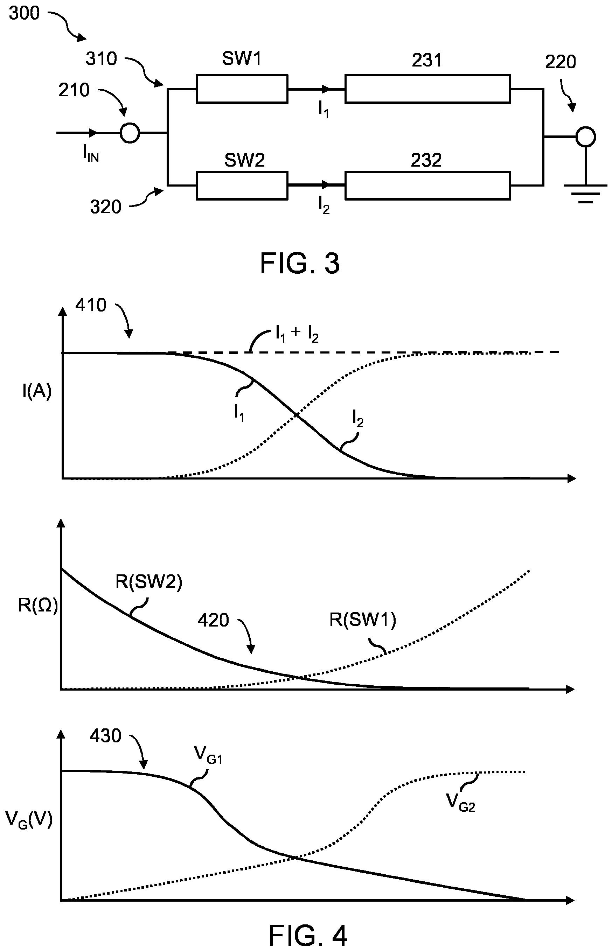

Fig. 3 illustrates the equivalent circuit 300 for this scenario.

This equivalent circuit 300 comprises two branch elements 310, 320 connected in parallel from the input electrical interface 210 to the return electrical interface 220. Each branch element comprises a respective first switch SW1, SW2 and a respective conductive element 231, 232. Thus, a first branch element 310 comprises a first first switch SW1 and a first conductive element 231 and a second branch element 320 comprises a second first switch SW2 and a second conductive element 232.

Each branch element has an associated resistance R_{BR}, which is the resistance of the conductive element R_{CE} (of said branch element) and the first switch R_{SW} (of said branch element). The resistance of the first switch in each branch element is controlled by the control arrangement 250. In particular, where each switch comprises a voltage-controllable switch (e.g., a transistor), a magnitude of a gate voltage applied to a switch controls the resistance of the said transistor (e.g., by controlling the transistor to operate in the linear mode of operation).

In this way, the resistance of the first switch in each branch element is a function of the gate voltage applied to the first switch by the control arrangement 250. The conductance G_{BR} of a branch element is therefore given by the following equation: ${G}_{BR} = \frac{1}{{R}_{SW} \left({V}_{G}\right) + {R}_{CE}}$ **where** *R_{SW}*(*V_{G}*) is the resistance of the first switch (of said branch element) as a function of the gate voltage V_{G} applied by the control arrangement to the first switch and R_{CE} is the resistance of the conducting element (of said branch element).

It will be appreciated that the value of *R_{SW}*(*V_{G}*) may have a minimum value, representing the smallest possible resistance of the first switch (of said branch element) when completely turned on. This can be performed by applying an appropriate gate voltage V_{G}.

Under the assumption that the resistance of each conducting element is substantially the same as one another, to maintain a substantially constant current flow between the input and return electrical interfaces, then the branch conductance of the branch elements should have the following relationship: ${G}_{BR} = \frac{{I}_{BR}}{{I}_{IN}} {G}_{BR} \left(Vg, max\right)$ where I_{BR} is the magnitude of the current through the branch element, I_{IN} is the magnitude of the current supplied to the input electrical interface and G_{BR}(V_{G}, max) is the maximum possible/theoretical conductance of the branch element when the switch is conductive, with the sum of the magnitude of the currents through all branch elements equaling the total magnitude of the current supplied to the input electrical interface.

The resulting target resistance of the switch of each branch element is: ${R}_{SW} = \frac{1}{{G}_{BR}} - {R}_{CE}$

The corresponding required gate voltage for each switch/ transistor can be extracted from the known transfer characteristics of the switch (which are well established and available).

More particularly, the resistance of a switch can be calculated from the transfer characteristics by the following relationship: ${R}_{SW} \left({V}_{G}\right) = \frac{{V}_{DS}}{{I}_{D} \left({V}_{G}\right)}$ where V_{DS} is the voltage difference between the drain and the source of the switch/transistor and I_{D} is the drain current.

In some examples, to obtain a smooth transition between the currents in two branch elements, a sinusoidal or an error function-like transition can be used. In particular, the transition of current amplitude between two current levels is preferably controlled to be sinusoidal (e.g., resembling a half-wave sinusoid).

However, it will be appreciated that other forms of transition may be employed, such as a linear transition (for ease and reliability of control), a Blackman-window shaped transition (for reduced harmonics), a Gaussian-shaped transition and so on.

Fig. 4 provides waveforms demonstrating an exemplary performance of such an approach.

A first set of waveforms 410 illustrate desired electrical currents through a first and second branch element, for a transition of current flow entirely through the first branch element to entirely through the second branch element. Thus, the first set of waveforms 410 illustrates a first branch element current I₁ and a second branch element current I₂.

A second set of waveforms 420 illustrate calculated change in resistance of the first switch for the first and second branch element. Thus, the second set of waveforms 420 illustrates a first first switch resistance R(SW1) and a second first switch resistance R(SW2). The resistance values are illustrated on a logarithmic scale.

A third set of waveforms 430 illustrate the calculate gate voltage for the first switch in the first and second branch elements. Thus, the third set of waveforms 430 illustrates a first gate voltage V_{G1} (for the first first switch SW1) and a second gate voltage V_{G2} (for the second first switch SW2).

For the purpose of this example, a transition of a desired current for two branch elements (e.g., from full current to no current or vice versa) shaped like an error function. The required switch resistances are calculated using equations (1) to (3). The corresponding gate voltages are calculated using the transfer characteristics of each switch.

The foregoing example demonstrates how a control arrangement is able to control the conductivity of each switch in order to maintain the current flow from an input electrical interface to a return electrical interface whilst changing which conductive element conducts current, i.e., perform the transition between different conductive elements being conductive.

More particularly, it has been demonstrated how the relationship between a gate voltage provided to a switch and the permissible current flow through the switch is known, such that it is possible to control the current flow through each branch element (using gate voltage control). Accordingly, it is possible to achieve a smooth transition between which set of one or more conductive elements conduct current.

As previously mentioned, it is preferable to control the magnitude of the current flow through a set of one or more conductive elements during a transition from conducting current to not conducting current (or vice versa) to be sinusoidal or error-function-like (as illustrated by Fig. 4). This can be achieved through appropriate control of the gate voltage of each switch.

The control arrangement may be configured to perform the control of the switch arrangement using an open loop control scheme, e.g., according to a predetermined control scheme that does not directly respond to any feedback. This can rely upon the known properties or parameters of each switch in the switch arrangement to achieve the desired goal.

Exemplary control schemes may define a duty cycle for each conductive element, e.g., a duty cycle of 20% for each conductive wire. The control arrangement may be configured to control the flow of current from the input electrical interface such that the duty cycle for each conductive element is achieved (e.g., current flows through the conductive element for the prescribed duty cycle).

In some examples, the control arrangement may comprise a feedback system configured to monitor a current from the input electrical interface to the return electrical interface, e.g., an overall current and/or each branch current. This allows for the control arrangement to respond to changes or modifications to any current flow in order to maintain or regulate the current flow., e.g., to increase a conductivity of a switch if there is an increase in current.

Appropriate examples for a feedback system will be readily apparent to the skilled person, e.g., comprising one or more current sensors (ammeters) or the like.

Turning back to Fig. 2, is has been briefly mentioned that the plurality of conductive elements may further comprise a dummy load 239 configured to, when conducting current, not produce an electromagnetic field for performing any non-negligible interaction with any trapped particle.

The control arrangement 250 may be configured to, when there is desire to have no conductive wire active (e.g., according to some predetermined control strategy), control the switch arrangement to direct current through the dummy load 239. This provides a mechanism for maintaining a current flow between the input 210 and return 220 interfaces (thereby reducing parasitic electromagnetic fields), even when no conductive wire is conducting current.

Moreover, the dummy load 239 provides a path for current flow during activation and/or deactivation of a current source (providing the input signal I_{IN}). In particular, any resulting voltage peaks during such (de)activation of the current source will be less likely to induce fluctuations in any electromagnetic field capable of interacting with any trapped particles. Furthermore, the slew rate for turning on or off any such current source might be much slower, which also decreases the amplitude of the unwanted voltage peaks and/or improves settling time of the system.

The dummy load 239 may be of particular use for some control schemes. For instance, if a control scheme defines that each conducive wire should have a duty cycle of 20%, but there are only 4 conductive wires, then the dummy load 239 may be used to conduct the current during any remaining time period.

In previously described examples, it has been assumed that there is a desire for all current flow from an input electrical interface to the return electrical interface to pass through a single conductive element. However, this is not essential. In particular, the control arrangement may be configured to, through appropriate control of the switch arrangement split a current flow through different conductive elements.

In particular examples, a current flow through each switch may be controlled to provide an uneven or unequal split of current flow through different conductive elements. This can be readily achieved through appropriate adjustment or selection of gate voltages for a switch to control a resistance of each switch.

In the previously illustrated example, the input electrical interface 210 comprises a single input line IL1 for carrying a single input signal (i.e., a single current).

In alternative examples, the input electrical interface 210 comprises a plurality of line inputs, each input line carrying a respective current. The switch arrangement may be configured to control to which conductive element each line switch connects.

Thus, the switch arrangement may comprise a respective first switch for each conductive element. Each first switch may, for each input line, comprise a respective sub-switch connected between said input line and the respective conductive element. Each sub-switch may have a controllable conductivity, which is controlled by the control arrangement (e.g., via application of a gate voltage) to control whether or not each conductive element conducts current - and from which input line it conduct current.

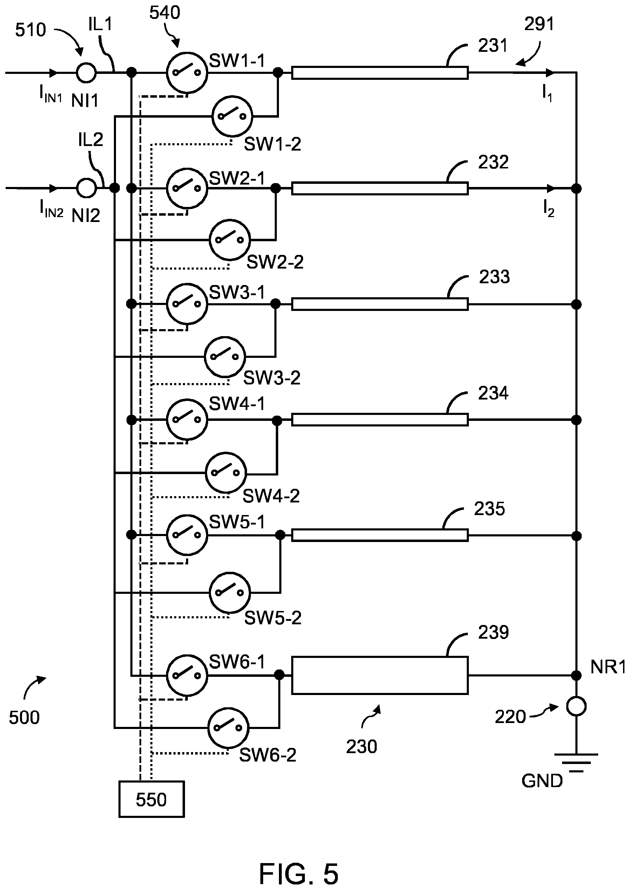

Fig. 5 illustrates a portion of a proposed particle trapping device 500.

The particle trapping device 500 again comprises an input electrical interface 510; a return electrical interface 220; a plurality 230 of conductive elements 231, 232, 233, 234, 235, 239; a switch arrangement 540; and a control arrangement 550.

The particle trapping device 500 differs from the previously described particle trapping device in that the input electrical interface 510 comprises a plurality of input lines IL1, IL2 (here: only two input lines) each carrying a respective current (i.e., a respective input signal carrying a different current). In particular, the plurality of input lines may comprise a first input line IL1 carrying a first current I_{IN1} and a second input line IL2 carrying a second current I_{IN2}, higher than the first current.

Correspondingly, the switching interface comprises, for each conductive element, a respective sub-switch for controlling whether or not said conductive element conducts current from a respective input line IL1, IL2.

Thus, for the illustrated example, the switch arrangement comprise a first set of sub-switches SW1-1, SW2-1, SW3-1, SW4-1, SW5-1, SW6-1 for controlling whether or not current flows (and optionally a magnitude thereof) from the first input line IL1 through each respective conductive element and a second set of sub-switches SW1-2, SW2-2, SW3-2, SW4-2, SW5-2, SW6-2 for controlling whether or not (and optionally a magnitude of) current flows from the second input line IL2 through each respective conductive element.

The control arrangement is configured to control a current flow from each input line IL1, IL2 of the input electrical interface 510 to the return electrical interface 220 by controlling the switches of the switching arrangement. This can be performed in any manner previously disclosed.

More particularly, the control arrangement is configured to control the switch arrangement to change which one or more conductive elements, of the plurality of conductive elements, conduct current from the input electrical interface to the return electrical interface whilst substantially maintaining an overall current flow between the input electrical interface and the return electrical interface.

Even more specifically, the control arrangement is configured to control the switch arrangement to change which one or more conductive elements, of the plurality of conductive elements, conduct current from each input line to the return electrical interface whilst substantially maintaining an overall current flow from each input line to the return electrical interface.

In some examples, the control arrangement is configured to control the switch arrangement to, for each conductive wire, every time a second input line is to be connected to said conductive wire, connect the first input line to the conductive wire before connecting the second input line to said conductive wire.

This functions to effectively "pre-heat" the conductive wire before conducting a high current. This reduces a thermal shock effect of each conductive wire, thereby reducing a risk of unexpected changes in the electromagnetic field in the vicinity of any trapped particles.

In the previously illustrated examples, the return electrical interface 220 comprises a single return node for connection to a reference or ground voltage GND (e.g., an earth or a predefined voltage offset). However, this is not essential. In other examples, the return electrical interface may comprise a plurality of return nodes. For instance, where the input electrical interface comprises a plurality of input lines, the return electrical interface may comprise a respective return node for each input line.

The switch arrangement may be configured to control to which (if any) return node each connective element connects. This can be performed using a similar set of switches to that previously described for connecting to a plurality of input electrical interfaces. The control arrangement may be configured to control the connection(s) performed by the switch arrangement.

In some examples, where each return node corresponds to a different, respective input line, the control arrangement is configured to control the switch arrangement such for each connective element connected to an input line, said connective element also connects to the corresponding return node for the input line.

Previous embodiments have described how a particle trapping device may be configured to control which conductive elements are able to conduct current from the input electrical interface to the return electrical interface.

The selection as to which conductive elements conducts current may follow a predetermined pattern or sequence. The precise pattern or sequence may depend upon the particular use for the conductive elements and/or a desired function to be performed by the conductive elements (e.g., a desired quantum processing function).

In particular examples, the control arrangement is configured to sequentially change which one or more conductive elements of the plurality of conductive elements conduct current from the input electrical interface to the return electrical interface. In other words, the control arrangement may be configured to follow a sequence in controlling which conductive elements conduct current.

Even more particularly, in examples where the plurality of conductive wires comprises no fewer than four conductive wires, the control arrangement may be configured to control the switch arrangement to, for each conductive wire, prevent a current flow through a most spatially proximate other conductive wire whilst controlling current to flow through said conductive wire.

This restriction may be maintained even during transitions between switching which conductive element(s) conduct current, such that the control arrangement is configured to not simultaneously switch a conductivity of spatially adjacent or proximate conductive wires.

This reduces a risk of localized heating of a region in the particle trapping device, improving heat dissipation for each conductive wire and reducing a risk of fluctuations in any electromagnetic field (e.g. which might otherwise result from a thermally induced change in conductivity).

The particle trapping device may comprise a stack of one or more integrated circuits, comprising the components previously disclosed. Where appropriate, if the stack comprises two or more integrated circuits, the particle trapping device may comprise one or more through-vias, e.g., silicon through-vias, for connecting the integrated circuits together. Suitable examples are well known to the skilled person.

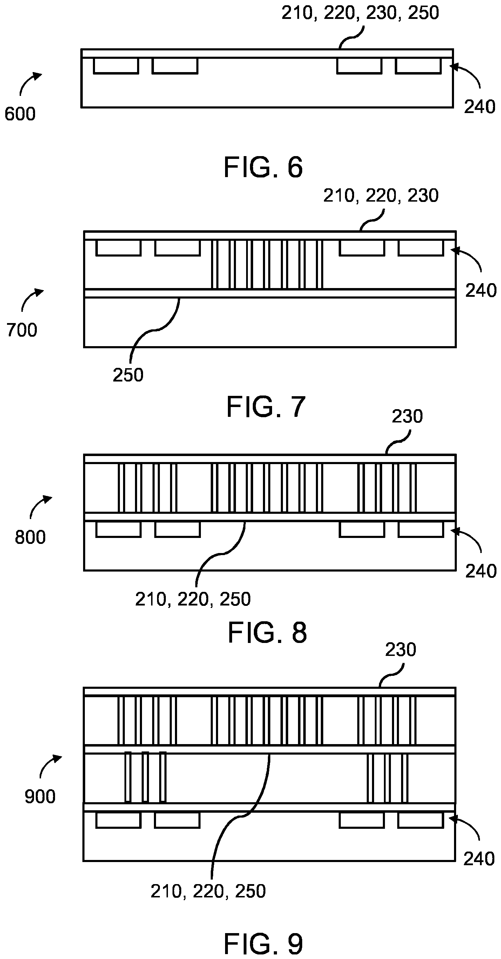

Figs. 6 to 9 illustrate different configurations for the stack of one or more integrated circuits.

Fig. 6 illustrates a first configuration 600 in which the input electrical interface 210, the return electrical interface 220, the conductive elements 230, the switch arrangement 240 and the control arrangement 250 are positioned in a same integrated circuit.

It is recognized that high current switches (for the switch arrangement) will be large. There may therefore be a need or desire to reposition components of the integrated circuit(s) to provide sufficient space for other components and/or to make a more compact device (in terms of surface area).

Fig. 7 illustrates a second configuration 700 in which the switch arrangement 240 and the control arrangement 250 are positioned in different integrated circuits of a stack of two or more integrated circuits. The input electrical interface 210, the return electrical interface 220, the conductive elements 230 are positioned in the same integrated circuit as the switches.

Fig. 8 illustrates a third configuration 800 in which the switch arrangement 240 and the control arrangement 250 are positioned in the same integrated circuit of a stack of two or more integrated circuits. The input electrical interface 210, the return electrical interface 220, the conductive elements 230 are positioned in a different integrated circuit.

This third configuration is particularly advantageous when the size of any required through-vias is less than the size of the switches. In other words, if the switches are larger than the through vias required for a low ohmic contact, it would prove advantageous to move these switches to a different integrated circuit in the stack.

Fig. 9 illustrates a fourth configuration 900 in which the switch arrangement 240 and the control arrangement 250 are positioned in different integrated circuits of a stack of three or more integrated circuits. The input electrical interface 210, the return electrical interface 220, the conductive elements 230 are positioned in a yet different integrated circuit.

This fourth configuration is particularly advantageous when the size of any required through-vias is less than the size of the switches. In other words, if the switches are larger than the through vias required for a low ohmic contact, it would prove advantageous to move these switches to a different integrated circuit in the stack to the control arrangement. This fourth configuration may only be required if the size of the control arrangement is too large to lie in a same integrated circuit as the switches for a desired overall size of the stack of integrated circuits.

In addition to the above-described examples, the following examples are disclosed.

Example 1. A particle trapping device comprising:
an input electrical interface;
a return electrical interface;
a plurality of conductive elements connected between the input electrical interface and the return electrical interface, wherein the plurality of conductive elements comprises a plurality of conductive wires each configured to, when conducting current, produce a respective electromagnetic field for interacting with a trapped particle;
a switch arrangement configured to, for each conductive element, facilitate control of whether or not said conductive element conducts current from the input electrical interface to the return electrical interface; and
a control arrangement configured to control the operation of the switch arrangement, wherein the control arrangement is configured to control the switch arrangement to change which one or more conductive elements, of the plurality of conductive elements, conduct current from the input electrical interface to the return electrical interface whilst substantially maintaining an overall current flow between the input electrical interface and the return electrical interface.

Example 2. The particle trapping device of example 1, wherein the control arrangement is configured to sequentially change which one or more conductive elements of the plurality of conductive elements conduct current from the input electrical interface to the return electrical interface.

Example 3. The particle trapping device of example 1 or 2, wherein each conductive wire is configured to carry a current greater than 100mA.

Example 4. The particle trapping device of any one of examples 1 to 3, wherein the switch arrangement comprises, for each conductive element:
a first switch connected between the input electrical interface and the conductive element; and/or
a second switch connected between the conductive element and the return electrical interface.

Example 5. The particle trapping device of example 4, wherein, for each conductive element:
the first switch, if present, has a current rating no less than 100mA; and
the second switch, if present, has a current rating no less than 100mA.

Example 6. The particle trapping device of example 5, wherein, for each conductive element:
the first switch, if present, has a current rating no less than 500mA; and
the second switch, if present, has a current rating no less than 500mA.

Example 7. The particle trapping device of any one of examples 4 to 6, wherein:
for each conductive element:
   the first switch, if present, comprises a first transistor having a first gate; and
   the second switch, if present, comprises a second transistor having a second gate; and
the control arrangement is configured to control a voltage supplied to each, if any, first gate and each, if any, second gate to thereby control the operation of the switch arrangement.

Example 8. The particle trapping device of any one of examples 1 to 7, wherein the return electrical interface is connected to a ground or reference voltage.

Example 9. The particle trapping device of any one of examples 1 to 8, wherein the plurality of conductive elements further comprises a dummy load configured to, when conducting current, not produce an electromagnetic field for performing any non-negligible interaction with any trapped particle.

Example 10. The particle trapping device of any one of examples 1 to 9, wherein the input electrical interface comprises a plurality of input lines, each input line carrying a respective current.

Example 11. The particle trapping device of example 10, wherein:
the plurality of input lines comprises a first input line carrying a first current and a second input line carrying a second current, higher than the first current; and
the control arrangement is configured to control the switch arrangement to, for each conductive wire, every time a second input line is to be connected to said conductive wire, connect the first input line to the conductive wire before connecting the second input line to said conductive wire.

Example 12. The particle trapping device of any one of examples 1 to 11, wherein the control arrangement is configured to control the switch arrangement to substantially maintain a resistance between the input electrical interface and the return electrical interface.

Example 13. The particle trapping device of any one of examples 1 to 12, wherein:
the plurality of conductive wires comprises no fewer than four conductive wires; and
the control arrangement is configured to control the switch arrangement to, for each conductive wire, prevent a current flow through a most spatially proximate other conductive wire whilst controlling current to flow through said conductive wire.

Example 14. The particle trapping device of any one of examples 1 to 13, wherein the particle trapping device comprises a stack of two or more integrated circuits, wherein the switch arrangement and the control arrangement are positioned in different integrated circuits in the stack of two or more integrated circuits.

Example 15. The particle trapping device of example 14, wherein:
the stack of two or more integrated circuits comprises three or more integrated circuits; and
the switch arrangement; the control arrangement and the plurality of conductive wires are positioned in different integrated circuits of the stack of three or more integrated circuits.

Although specific examples have been illustrated and described herein, it will be appreciated by those of ordinary skill in the art that a variety of alternate and/or equivalent implementations may be substituted for the specific examples shown and described without departing from the scope of the present invention. This application is intended to cover any adaptations or variations of the specific examples discussed herein. Therefore, it is intended that this invention be limited only by the claims and the equivalents thereof.

It should be noted that the methods and devices including its preferred embodiments as outlined in the present document may be used stand-alone or in combination with the other methods and devices disclosed in this document. In addition, the features outlined in the context of a device are also applicable to a corresponding method, and vice versa. Furthermore, all aspects of the methods and devices outlined in the present document may be arbitrarily combined. In particular, the features of the claims may be combined with one another in an arbitrary manner.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiments outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A particle trapping device comprising:
an input electrical interface;
a return electrical interface;
a plurality of conductive elements connected between the input electrical interface and the return electrical interface, wherein the plurality of conductive elements comprises a plurality of conductive wires each configured to, when conducting current, produce a respective electromagnetic field for interacting with a trapped particle;
a switch arrangement configured to, for each conductive element, facilitate control of whether or not said conductive element conducts current from the input electrical interface to the return electrical interface; and
a control arrangement configured to control the operation of the switch arrangement, wherein the control arrangement is configured to control the switch arrangement to change which one or more conductive elements, of the plurality of conductive elements, conduct current from the input electrical interface to the return electrical interface whilst substantially maintaining an overall current flow between the input electrical interface and the return electrical interface.

2. The particle trapping device of claim 1, wherein the control arrangement is configured to sequentially change which one or more conductive elements of the plurality of conductive elements conduct current from the input electrical interface to the return electrical interface.

3. The particle trapping device of claim 1 or 2, wherein each conductive wire is configured to carry a current greater than 100mA.

4. The particle trapping device of any one of claims 1 to 3, wherein the switch arrangement comprises, for each conductive element:
a first switch connected between the input electrical interface and the conductive element; and/or
a second switch connected between the conductive element and the return electrical interface.

5. The particle trapping device of claim 4, wherein, for each conductive element:
the first switch, if present, has a current rating no less than 100mA; and
the second switch, if present, has a current rating no less than 100mA.

6. The particle trapping device of claim 5, wherein, for each conductive element:
the first switch, if present, has a current rating no less than 500mA; and
the second switch, if present, has a current rating no less than 500mA.

7. The particle trapping device of any one of claims 4 to 6, wherein:
for each conductive element:
the first switch, if present, comprises a first transistor having a first gate; and
the second switch, if present, comprises a second transistor having a second gate; and
the control arrangement is configured to control a voltage supplied to each, if any, first gate and each, if any, second gate to thereby control the operation of the switch arrangement.

8. The particle trapping device of any one of claims 1 to 7, wherein the return electrical interface is connected to a ground or reference voltage.

9. The particle trapping device of any one of claims 1 to 8, wherein the plurality of conductive elements further comprises a dummy load configured to, when conducting current, not produce an electromagnetic field for performing any non-negligible interaction with any trapped particle.

10. The particle trapping device of any one of claims 1 to 9, wherein the input electrical interface comprises a plurality of input lines, each input line carrying a respective current.

11. The particle trapping device of claim 10, wherein:
the plurality of input lines comprises a first input line carrying a first current and a second input line carrying a second current, higher than the first current; and
the control arrangement is configured to control the switch arrangement to, for each conductive wire, every time a second input line is to be connected to said conductive wire, connect the first input line to the conductive wire before connecting the second input line to said conductive wire.

12. The particle trapping device of any one of claims 1 to 11, wherein the control arrangement is configured to control the switch arrangement to substantially maintain a resistance between the input electrical interface and the return electrical interface.

13. The particle trapping device of any one of claims 1 to 12, wherein:
the plurality of conductive wires comprises no fewer than four conductive wires; and
the control arrangement is configured to control the switch arrangement to, for each conductive wire, prevent a current flow through a most spatially proximate other conductive wire whilst controlling current to flow through said conductive wire.

14. The particle trapping device of any one of claims 1 to 13, wherein the particle trapping device comprises a stack of two or more integrated circuits, wherein the switch arrangement and the control arrangement are positioned in different integrated circuits in the stack of two or more integrated circuits.

15. The particle trapping device of claim 14, wherein:
the stack of two or more integrated circuits comprises three or more integrated circuits; and
the switch arrangement; the control arrangement and the plurality of conductive wires are positioned in different integrated circuits of the stack of three or more integrated circuits.

## Amended claims

### Amended claims in accordance with Rule 137(2) EPC.

1. A particle trapping device comprising:
an input electrical interface (210; 510);
a return electrical interface (220);
a plurality of conductive elements (230) connected between the input electrical interface and the return electrical interface, wherein the plurality of conductive elements comprises a plurality of conductive wires (231, 232, 233, 234, 235) each configured to, when conducting current, produce a respective electromagnetic field for interacting with a trapped particle; and **characterized by** further comprising:
a switch arrangement (240; 540) configured to, for each conductive element, facilitate control of whether or not said conductive element conducts current from the input electrical interface to the return electrical interface; and
a control arrangement (250; 550) configured to control the operation of the switch arrangement, wherein the control arrangement is configured to control the switch arrangement to change which one or more conductive elements, of the plurality of conductive elements, conduct current from the input electrical interface to the return electrical interface whilst substantially maintaining an overall current flow between the input electrical interface and the return electrical interface.

2. The particle trapping device of claim 1, wherein the control arrangement (250; 550) is configured to sequentially change which one or more conductive elements of the plurality of conductive elements (230) conduct current from the input electrical interface (210; 510) to the return electrical interface (220).

3. The particle trapping device of claim 1 or 2, wherein each conductive wire is configured to carry a current greater than 100mA.

4. The particle trapping device of any one of claims 1 to 3, wherein the switch arrangement (240; 540) comprises, for each conductive element:
a first switch connected between the input electrical interface (210; 510) and the conductive element; and/or
a second switch connected between the conductive element and the return electrical interface (220).

5. The particle trapping device of claim 4, wherein, for each conductive element:
the first switch, if present, has a current rating no less than 100mA; and
the second switch, if present, has a current rating no less than 100mA.

6. The particle trapping device of claim 5, wherein, for each conductive element:
the first switch, if present, has a current rating no less than 500mA; and
the second switch, if present, has a current rating no less than 500mA.

7. The particle trapping device of any one of claims 4 to 6, wherein:
for each conductive element:
the first switch, if present, comprises a first transistor having a first gate; and
the second switch, if present, comprises a second transistor having a second gate; and
the control arrangement (250; 550) is configured to control a voltage supplied to each, if any, first gate and each, if any, second gate to thereby control the operation of the switch arrangement.

8. The particle trapping device of any one of claims 1 to 7, wherein the return electrical interface (220) is connected to a ground or reference voltage.

9. The particle trapping device of any one of claims 1 to 8, wherein the plurality of conductive elements (230) further comprises a dummy load (239) configured to, when conducting current, not produce an electromagnetic field for performing any non-negligible interaction with any trapped particle.

10. The particle trapping device of any one of claims 1 to 9, wherein the input electrical interface (210; 510) comprises a plurality of input lines, each input line carrying a respective current.

11. The particle trapping device of claim 10, wherein:
the plurality of input lines comprises a first input line (IL1) carrying a first current and a second input line (IL2) carrying a second current, higher than the first current; and
the control arrangement (550) is configured to control the switch arrangement (540) to, for each conductive wire, every time a second input line is to be connected to said conductive wire, connect the first input line to the conductive wire before connecting the second input line to said conductive wire.

12. The particle trapping device of any one of claims 1 to 11, wherein the control arrangement (250; 550) is configured to control the switch arrangement (240; 540) to substantially maintain a resistance between the input electrical interface (210; 510) and the return electrical interface (220).

13. The particle trapping device of any one of claims 1 to 12, wherein:
the plurality of conductive wires (231, 232, 233, 234, 235) comprises no fewer than four conductive wires; and
the control arrangement (250; 550) is configured to control the switch arrangement (240; 540) to, for each conductive wire, prevent a current flow through a most spatially proximate other conductive wire whilst controlling current to flow through said conductive wire.

14. The particle trapping device of any one of claims 1 to 13, wherein the particle trapping device comprises a stack of two or more integrated circuits, wherein the switch arrangement (240; 540) and the control arrangement (250; 550) are positioned in different integrated circuits in the stack of two or more integrated circuits.

15. The particle trapping device of claim 14, wherein:
the stack of two or more integrated circuits comprises three or more integrated circuits; and
the switch arrangement (240; 540); the control arrangement (250; 550) and the plurality of conductive wires (231, 232, 233, 234, 235) are positioned in different integrated circuits of the stack of three or more integrated circuits.
